# EUROPEAN PATENT APPLICATION

(11) **EP 1 484 763 A1**
(43) Date of publication of application: **08.12.2004**
(21) Application number: 04013046.0
(22) Date of filing: 02.06.2004
(51) Int. Cl.: G11B 27/28, H04N 5/445, G06F 17/30, G11B 27/34

(54) **Music program contents menu creation apparatus and method**

(30) Priority: 04.06.2003 JP 2003159624
(71) Applicant: Pioneer Corporation, Tokyo-to (JP)
(72) Inventor: Miyasato, Hajime, Tsurugashima-shi, Saitama-ken (JP); Gayama, Shinichi, Tsurugashima-shi, Saitama-ken (JP); Tabata, Toshio, Tsurugashima-shi, Saitama-ken (JP)
(74) Representative: Klingseisen, Franz, Dipl.-Ing.

(57) **Abstract**

A broadcast video signal of a broadcast program is stored. A predetermined feature portion of each of frames in a broadcast video signal of a music program is detected from the stored broadcast video signal. A frame section serving as a music section in which a display mode of the predetermined feature portion is stable andmusic is continuously included, is detected from the broadcast video signal in the music program as a performance scene. A video signal representing an image concerning the detected performance scene is created and output as the menu.

## Description

### BACKGROUND OF THE INVENTION

### 1. Field of the Invention

The present invention relates to a music program contents menu creation apparatus which creates a menu representing contents of a music program.

### 2. Related Art

In a video recording apparatus such as a hard disk recorder, broadcast programs are recorded over, for example, 24 hours. Later, the user can select an arbitrary program from among the recorded programs so as to view it.

If such a video recording apparatus has a function of displaying a menu which represents broadcast contests as to a program, such as a news program, which changes in broadcast contents every day and which includes a plurality of items, it becomes possible for the user to select and view only interesting items in the program and the convenience in use of the video recording apparatus is significantly improved. A conventional technique of thus displaying broadcast contents as a selection menu is disclosed in, for example, Japanese Patent Application Laid-Open No. 2002-27411.

However, it has been considered that it is difficult to automatically create a menu of music played in a music program because music programs among broadcast programs usually have various configurations.

As for issues the present invention is to.solve, the above-described problem can be mentioned as an example. An obj ect of the present invention is to provide a music program contents menu creation apparatus, and method, for automatically creating a menu representing contents of a music program.

### SUMMARY OF THE INVENTION

A music program contents menu creation apparatus according to the invention of claim 1 relates to a music program contents menu creation apparatus which creates a menu concerning contents of a music program, characterized by:
a storage device which stores a broadcast video signal of a broadcast program;
a feature detection device which detects a predetermined feature portion of each of frames in a broadcast video signal of the music program from the broadcast video signal stored in the storage device;
a performance scene detection device which detects a frame section serving as a music section in which a display mode of the predetermined feature portion detected by the feature detection device is stable and music is continuously included, from the broadcast video signal in the music program, as a performance scene; and
a menu creation device which creates and outputs a video signal representing an image concerning the performance scene detected by the performance scene detection device, as the menu.

A music program contents menu creation method according to the invention of claim 8 relates to a music program contents menu creation method of creating a menu concerning contents of a music program, characterized by processes of:
storing a broadcast video signal of a broadcast program;
detecting a predetermined feature portion of each of frames in the broadcast video signal of the music program from the stored broadcast video signal;
detecting a frame section serving as a music section in which a display mode of the predetermined feature portion is stable and music is continuously included, from the broadcast video signal in the music program, as a performance scene; and
creating and outputting a video signal representing an image concerning the detected performance scene, as the menu.

### BRIEF DESCRIPTION OF THE DRAWINGS

FIG. 1 is a block diagram showing a music program contents menu creation apparatus according to the present invention;
FIG. 2 is a flow chart showing an edge detection operation;
FIG. 3 is a flow chart showing a telop detection operation;
FIG. 4 is a diagram showing a data table of telop information;
FIG. 5 is a flow chart showing a singing scene detection operation;
FIG. 6 is a flow chart showing a title telop detection operation; and
FIG. 7 is a diagram showing a monitor screen including a chapter menu.

### DESCRIPTION OF THE PREFERRED EMBODIMENTS

Hereafter, embodiments of the present invention will be described in detail with reference to the drawings.

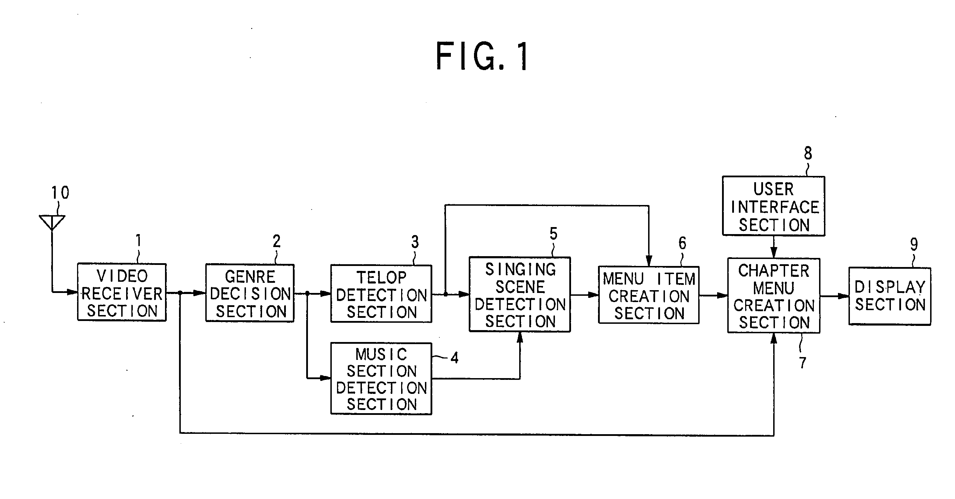

FIG. 1 shows a music program contents menu creation apparatus according to the present invention. This music program contents menu creation apparatus includes a video receiver section 1, a genre decision section 2, a telop detection section 3, a music section detection section 4, a singing scene detection section 5, a menu item creation section 6, a chapter menu creation section 7, a user interface section 8, and a display section 9.

The video receiver section 1 receives an arbitrary television broadcast wave via an antenna 10, demodulates the received signal, obtains a video signal and an audio signal (i.e., a broadcast video signal) , and stores the video signal and the audio signal internally. Furthermore, the video receiver section 1 extracts program information such as an EPG (electronic program guide) included in a television broadcast wave or a different broadcast wave, and stores the extracted program information as data. The video receiver section 1 includes, for example, a hard disk drive: The genre decision section 2 is connected to the video receiver section 1, and judges a genre of a program represented by the video signal stored in the video receiver section 1 by using the above-described program information.

The telop detection section 3 is connected to the genre decision section 2, and by using a luminance signal of the video signal stored in the video receiver section 1, detects telop information, such as a position of a telop appearing in a music program represented by the video signal, its character size, and a frame including the telop. The telop detection section 3 may be supplied with a video signal judged to be a music program by the genre decision section 2, from the genre decision section 2. Alternatively, the telop detection section 3 may take in a video signal judged to be a music program by the genre decision section 2, from the video receiver section 1.

The music section detection section 4 is connected to the genre decision section 2, and by using an audio signal of a program judged to be a music program by the genre decision section 2, detects a section in which music is present continuously, i.e. , a music section, and outputs its start frame and end frame to the singing scene detection section 5 as music section detection information. A music section detection method is described in Japanese Patent Application Laid-Open Nos. H10-247093 and 2000-66691.

The singing scene detection section 5 is connected to the telop detection section 3 and the music section detection section 4. Based on the telop information in the music program detected by the telop detection section 3 and the music section detected by the music section detection section 4, the singing scene detection section 5 detects a singing scene in the music program. While its concrete operation will be described later, a frame section, which is a music section included in a period during which the telop display mode is stable, is detected as a singing scene.

The menu item creation section 6 is connected to the singing scene detection section 5, and creates menu items for the singing scene detected by the singing scene detection section 5. The menu items are matters representing features of a singing scene. For example, the menu items are a title telop (a telop representing a music name or a singer name) , a thumbnail image of the singing scene, sound of an expressive portion of a music, and a face image of a singer. In this embodiment, the case where a title telop of a singing scene is detected is shown. However, other feature portions can also be used.

The chapter menu creation section 7 is connected to the menu item creation section 6, and by using the data of the menu item created by the menu item creation section 6, creates a chapter menu of the music program. The chapter menu creation section 7 mixes a video signal including the chapter menu with a video signal corresponding to a telop stored in the video receiver section 1, and outputs a resultant video signal to the display section 9.

The user interface section 8 is an operation section operated by a user for selecting an item (reduction telop) in the chapter menu displayed on a monitor screen of the display section 9.

If it is detected by the genre decision section 2 in the music program contents menu creation apparatus having the above configuration that a program genre in the video signal and the audio signal stored in the video receiver section 1 is music, a detection signal is supplied to the telop detection section 3 and the music section detection section 4.

In response to the detection signal, the telop detection section 3 detects telop information in the video signal stored in the video receiver section 1, i.e., in the video signal of the music program. For example, by detecting an intra-frame edge or an inter-frame edge of video signal, a telop is detected. The intra-frame edge is a portion where a luminance difference between adj acentpixels in the frame is high. If edges are present in the same pixel portion when intra-edges are compared between adjacent frames, the edges are inter-frame edges.

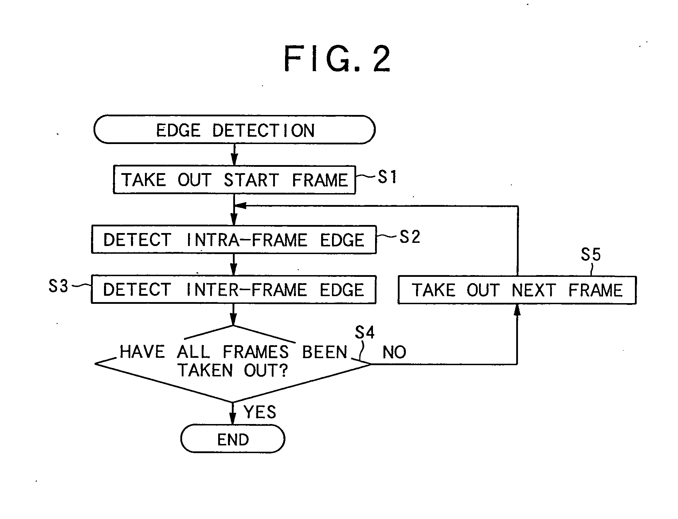

In edge detection, the telop detection section 3 first takes out a start frame in one music program from the video signal stored in the video receiver section 1 as shown in FIG. 2 (step S1). An intra-frame edge in the current frame taken out is detected (step S2). An inter-frame edge of the current frame and an immediately preceding frame is detected (step S3). If the current frame is the start frame, the step S3 is disregarded. After execution of the step S3, it is determined whether all frames in the music program have been taken out from the video receiver section 1 (step S4) . If all frames have not been taken out, then the next frame is taken out from the video receiver section 1 (step S5) , and the telop detection section 3 returns to the step S2. Thus, detection of the intra-frame edge and detection of the inter-frame edge are conducted.

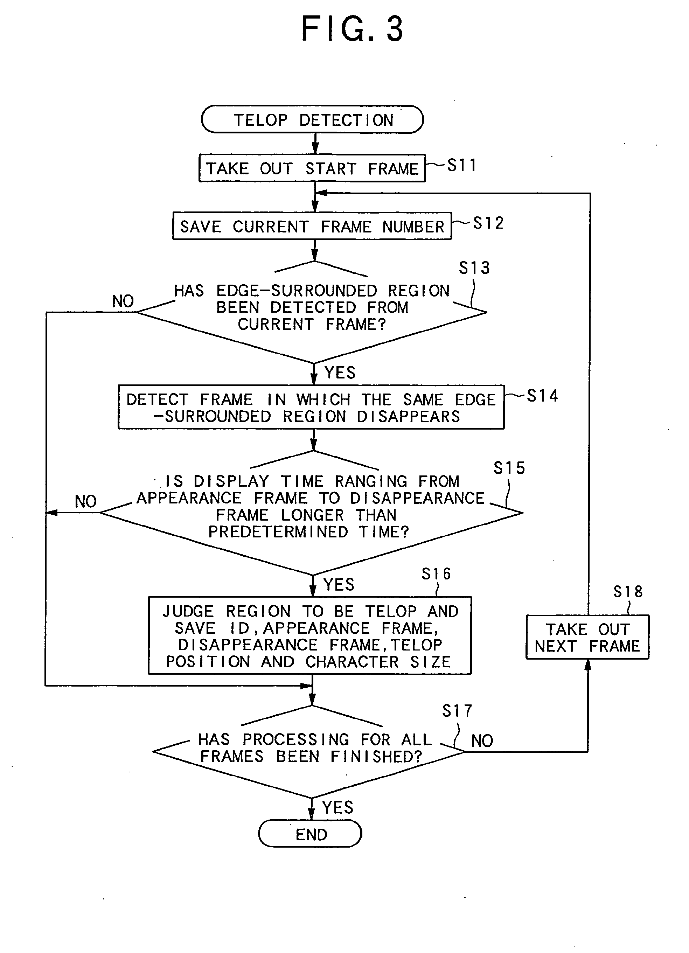

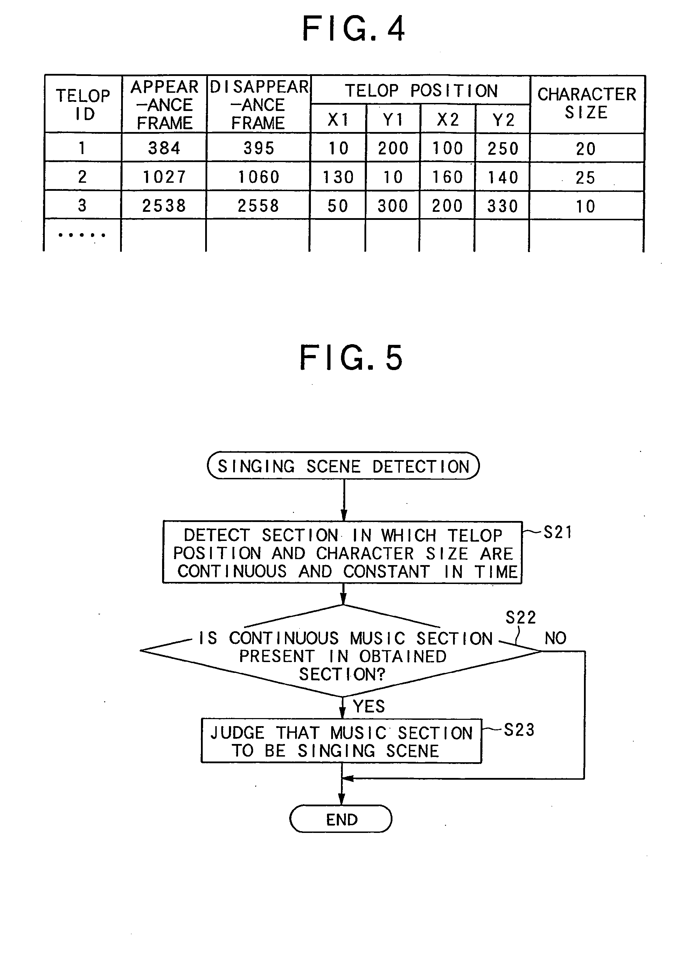

If all frames have been taken out, telop detection operation is conducted to obtain telop information from all edge detection contents. As shown in FIG. 3, a start frame in the music program is taken out from the video signal stored in the video receiver section 1 (step S11). The start frame at the step S11 is the oldest frame in time among the frames where edges have been detected. A frame number of the start frame is saved (step S12) . It is determined whether a region surrounded by edges is detected from the current frame (step S13). If a region surrounded by edges, i. e. , an edge-surrounded region is detected, then a frame which is continuous to the current frame and in which edges in the same region as the edge-surrounded region in the current frame disappear is detected (step S14) . It is determined whether a display time ranging from the edge-surrounded region appearance frame to the edge-surrounded region disappearance frame is longer than a predetermined time (step S15) . If the display time of the edge-surrounded region is judged to be longer than the predetermined time, then the edge-surrounded region is regarded as a telop region, and its ID (number), appearance frame, disappearance frame, atelopposition in the frame, and a character size are saved (step S16). At the step S16, the inside of the telop region is scanned to detect the character size. For detection of the character size, a character line information extraction method disclosed in, for example, Japanese Patent Application Laid-Open No. 2001-76094 can be used. As shown in FIG. 4, the telop information saved at the step S16 is written into an internal memory (not illustrated) for each telop as a data table including the ID, appearance frame, disappearance frame, telop position and character size. Here, each telop takes the shape of a rectangle, which is a usual shape. X1 and Y1 in the telop position represent coordinates of the left upper position of the telop, and X2 and Y2 represent coordinates of the right lower position of the telop. In some cases, the telop shape is not rectangular. Therefore, the telop information needs to include data representing its shape in such a case.

After the execution of the step S16, it is determined whether all frames having edges detected have been taken out from the video receiver section 1 (step S17). If all frames have not been taken out, the next frame where an edge has been detected is taken out (step S18) , and the processing is returned to the step S12 to repeat the above-described telop region determination.

In the music section detection section 4, a music section is detected according to an audio signal in a program judged to be a music program by the genre decision section 2. When the level of the audio signal is higher than or equal to a predetermined level, and its state is continuous, its start frame and end frame are output to the singing scene detection section 5 as music section detection information. When a plurality of music sections have been detected, the same number of music section detection information pieces as the number of music sections is obtained.

As shown in FIG. 5, the singing scene detection section 5 first obtains telop information from the telop detection section 3, and detects an appearance section of a telop in which the telop position and character size are continuous and constant in time (step S21). The detection of the telop appearance section is based on the fact that a position of a word telop displayed in a singing scene of a music program is fixed, its character sizes are constant, and the telop is continuous and constant in time. The telop appearance section can be represented by a frame number. If the telop position and character size are continuous and constant in time, the telop display mode is stable.

It is determined whether the music section detected by the music section detection section 4 is present in the telop appearance section obtained at the step S21 (step S22) . If the telop appearance section detected at the step S21 includes a singing scene, a music section is present. Therefore, this decision is made. If it is judged at the step S22 that a music section is present in the telop appearance section, the music section is judged to be a singing scene (step S23) . Since telops are detected by the telop detection section 3 and are saved in the telop detection section 3 as telop information, the singing scene detection section 5 executes the steps S21 to S23 for each of the detected telops, and determines singing scenes.

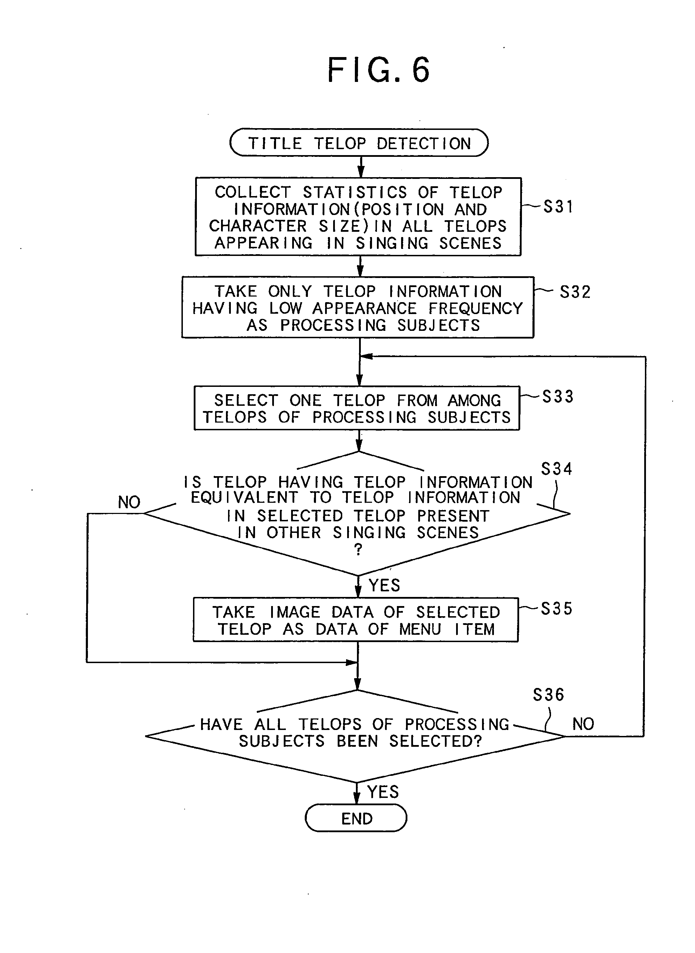

In order to detect a title telop of a singing scene as a menu item, as shown in Fig. 6, the menu item creation section 6 first collects the statistics of telop information (position and character size) in all telops appearing in singing scenes detected by the singing scene detection section 5 (step S31) . In other words, the appearance frequency is.checked for each telop pattern. The telop information for all telops appearing in singing scenes can be obtained from the telop information saved in the telop detection section 3. At step S31, with respect to all telops appearing in singing scenes, only telops having the same position and character size (by taking the telop ID as the unit in FIG. 4) are collected, and their total appearance frequency is calculated. For example, if there are two telops having the same position and character size, the appearance frequency of the telop of that kind is set equal to two. A telop different in position and character size from other telops is set equal to one in appearance frequency. After execution of the step S31, only telops having a low appearance frequency are taken as processing subjects, and other telops are ignored (step S32 ) . The number of telops taken as processing subjects at the step S32 is at least one. The telops of processing subjects may be determined by setting a threshold.

The menu item creation section 6 selects one telop from telops taken as the processing subjects at the step S32 (step S33) . It is determined whether a telop having telop information equivalent to telop information of the telop selected this time is present in other singing scenes (step S34). If the telop selected this time is a title telop, since in many cases telops having similar telop information are present in other singing scenes in the same music program, the decision at the step S34 is made. Contents of the telop information compared in each singing scene at the time of this decision are the telop position and character size. However, since the title telop positions differ depending on each singing scene in some cases, only the character size may be used. If it is judged at the step S34 that the same telop information is not present in other singing scenes, the processing proceeds to step S36 described later. On the other hand, if it is judged that the same telop information is present in another singing scene, image data of the telop selected this time, i.e. , image data of the title telop is supplied to the chapter menu creation section 7 as data of the menu item (step S35) . After execution of the step S35, it is determined whether the processing at the step S34 has been finished for all telops taken as the processing subjects at the step S32 (step S36) . If the processing has not been finished for all telops, then the processing returns to the step S33 and another one telop is selected to repeat the above-described operation. If the processing at the step S34 has been finished for all telops taken as the processing subjects, the menu item creation operation is finished.

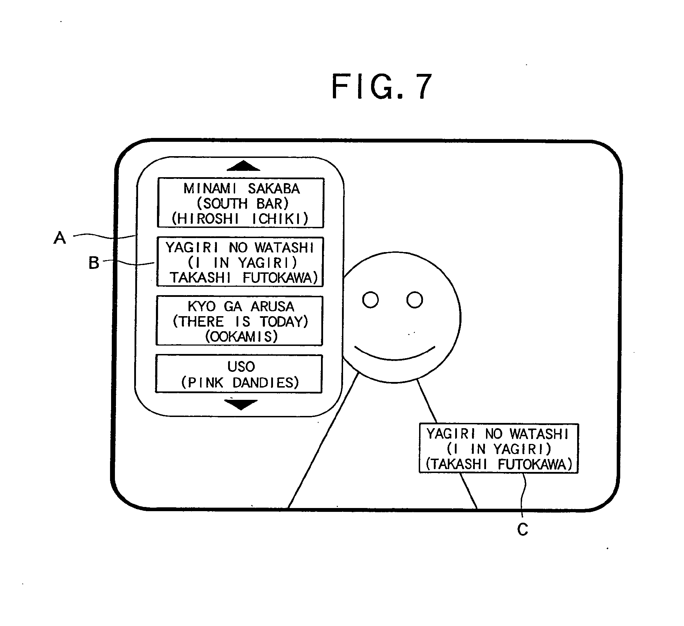

The chapter menu creation section 7 creates a chapter menu of the music program by using image data of the title telop which is menu item data created by the menu item creation section 6. Each time image data of one title telop is supplied, one item of the chapter menu is added and formed by using the image data. The one item of the chapter menu represents a title concerning one music item. Respective items are displayed on a monitor of the display section 9 as a reduction image of the title telop image. The chapter menu is displayed on the monitor, for example, as represented by a symbol A in FIG. 7.

The user selects a desired item from among a plurality of items (represented by a symbol B in FIG. 7) in the chapter menu displayed on the monitor of the display section 9 via the user interface section 8. By using a frame number of the telop corresponding to the selected item, the chapter menu creation section 7 reads out the video signal for the frame number from the video receiver section 1 over a predetermined period, mixes the video signal with a video signal of the chapter menu, and supplies a resultant signal to the display section 9. In a display example shown in FIG. 7, an image (symbol C) concerning the selecteditem"YAGIRINOWATASHI (I in Yagiri) (TakashiFutokawa)" is displayed on the monitor of the display section 9. The predetermined period over which the contents of the selected item are displayed on the monitor as a video image may be a period of a music section concerning the singing scene, or may be a constant period irrespective thereof.

As in the above-described embodiments, a title telop is extracted from a frame including the title telop in the singing scene, and used as an item of the chapter menu. Therefore, heavy-load processing such as character recognition, image recognition, and voice recognition is not needed. In implementing the chapter menu display, therefore, resources can be kept low. Furthermore, even if the configurations of a music programs differ, it can cope with the difference in configurations of music programs.

As for each item in the chapter menu, images represented by image data of only the title telop portion are reduced and used. Therefore, a plurality of items can be displayed in the menu, as shown in FIG. 7. Furthermore, even if the images are reduced to a relatively small size, it is possible to facilitate recognition of respective items.

The above embodiments have been described, supposing that a predetermined feature portion of each frame in the broadcast video signal of the music program is a telop. However, the present invention is not restricted to such embodiments. The predetermined feature portion may also be a still image. The predetermined feature portion may be an image of a face of a specific person. By using a face recognition apparatus, which recognizes a person based on a profile of a face and a position relation among eyes, a nose and a mouth, a face image of a specific person can be extracted. The predetermined feature portion may be an expressive portion of a music, however, in this case, an image concerning a singing scene can be a choice image of sample singing sounds.

According to the present invention, a menu representing contents of a music program can be created automatically as described before. Furthermore, the present invention can be applied to a video recording apparatus such as a hard disk recorder.

It should be understood that various alternatives to the embodiment of the invention described herein may be employed in practicing the invention. Thus, it is intended that the following claims define the scope of the invention andthatmethods and structures within the scope of these claims and their equivalents be covered thereby.

The entire disclosure of Japanese Patent Application No. 2003-159624 filed on June 4, 2003 including the specification, claims, drawings and abstract is incorporated herein by reference in its entirety.

## Claims

1. A music program contents menu creation apparatus which creates a menu concerning contents of a music program, **characterized by**:
a storage device (1) which stores a broadcast video signal of a broadcast program;
a feature detection device (3) which detects a predetermined feature portion of each of frames in a broadcast video signal of the music program from the broadcast video signal stored in the storage device (1);
a performance scene detection device (4,5) which detects a frame section serving as a music section in which a display mode of the predetermined feature portion detected by the feature detection device (3) is stable andmusic is continuously included, from the broadcast video signal in the music program, as a performance scene; and
a menu creation device (6) which creates and outputs a video signal representing an image concerning the performance., scene detected by the performance scene detection device (4,5), as the menu.

2. A music program contents menu creation apparatus according to claim 1, wherein
the feature detection device (3) comprises a telop detection section (3) which detects a telop in each frame as the predetermined feature portion, and
the performance scene detection device (4,5) comprises:
a constant telop appearance section detection device which detects a section in which a telop detected by the telop detection section (3) is constant in telop position and character size and appears continuously;
a music section detection device (4) which detects a music section according to a video signal or an audio signal in a music program included in the broadcast video signal stored in the storage device (1) ; and
a decision device (5) which, at the time of presence of a music section detected by the music section detection device (4) in an appearance section detected by the constant telop appearance section detection device, judges that the music section is a performance scene, and notifies the menu creation device (6) of the judged performance scene.

3. Amusic program contents menu creation apparatus according to claim 2 , wherein the performance scene judged by the decision device (5) is a singing scene.

4. Amusic program contents menu creation apparatus according to any one of claims 1 to 3 , wherein the menu creation device (6) comprises:
an appearance frequency detection device which detects a telop of a pattern having a low appearance frequency from all telops appearing in performance scenes detected by the performance scene detection device (4,5);
a determination device which determines whether a telop equivalent in pattern to the telop detected by the appearance frequency detection device is present in other performance scenes detected by the performance scene detection device (4,5) ; and
a generation device which judges a telop, judged by the determination device to be equivalent in pattern, and present in the other performance scenes, to be a title telop, and generates a video signal for the menu including the title telop.

5. Amusic program contents menu creation apparatus according to any one of claims 2,3, or 4 wherein the telop detection section (3) comprises:
an edge region detection device which detects an edge-surrounded region surrounded by portions having a high luminance difference between adjacent pixels in each of frames in the video signal of the music program from the broadcast video signal stored in the storage device (1); and
a telop decision device which judges an edge-surrounded region detected by the edge region detection device to be a telop when the edge-surrounded region is continuously substantially the same region over frames whose number is more than a predetermined number of frames, and outputs telop information including an appearance frame, a disappearance frame, a telop position and a character size of the telop to the menu creation device.

6. Amusic program contents menu creation apparatus according to any one of claims 1 to 5, further comprising an operation device which selects any one item from among display items in the menu,
wherein the menu creation device (6) takes out a broadcast video signal ranging from an appearance frame to at least disappearance frame of the predetermined feature portion corresponding to one item selected by the operation device, from the storage device (1), and mixes the broadcast video signal with a video signal representing the menu.

7. Amusic program contents menu creation apparatus according to any one of claims 1 to 6 wherein the menu creation device (6) uses data obtained by reducing a feature portion represented by the image data, as the video signal representing the menu.

8. A music program contents menu creation method of creating a menu concerning contents of a music program, **characterized by** processes of:
storing a broadcast video signal of a broadcast program;
detecting a predetermined feature portion of each of frames in the broadcast video signal of the music program from the stored broadcast video signal;
detecting a frame section serving as a music section in which a display mode of the predetermined feature portion is stable and music is continuously included, from the broadcast video signal in the music program, as a performance scene; and
creating and outputting a video signal representing an image concerning the detected performance scene, as the menu.
